# EUROPÄISCHE PATENTANMELDUNG

(11) **EP 3 804 490 A1**
(43) Veröffentlichungstag der Anmeldung: **14.04.2021**
(21) Anmeldenummer: 20401049.0
(22) Anmeldetag: 01.10.2020
(51) Int. Cl.: A01C 7/08

(54) **LANDWIRTSCHAFTLICHE VERTEILMASCHINE**

(30) Priorität: 10.10.2019 DE 102019127251
(71) Anmelder: Amazonen-Werke H. Dreyer GmbH & Co. KG, 49205 Hasbergen (DE)
(72) Erfinder: Johannaber, Stefan Jan, 49536 Lienen (DE); Wiebusch, Thorsten, 49205 Hasbergen (DE); Breuer, Jan Henrik, 48231 Warendorf (DE)

(57) **Zusammenfassung**

Landwirtschaftliche pneumatische Verteilmaschine zum Verteilen von granularem Material (10), insbesondere Saatgut und/oder Dünger, auf einer landwirtschaftlichen Fläche (11) umfassend zumindest eine Hauptströmungsleitung (20) durch die ein Förderstrom (21), insbesondere Luft, und/oder das granulare Material (10), vorzugsweise in Form einer Mehrphasenströmung, förderbar sind, zumindest eine Strömungserzeugungseinrichtung (30), insbesondere ein Gebläse, die mit der Hauptströmungsleitung (20) koppelbar ist und die dazu eingerichtet ist, den, vorzugsweise einstellbaren, Förderstrom (21) zu erzeugen und diesen in die zumindest eine Hauptströmungsleitung (20) einzuleiten, und zumindest eine von der Hauptströmungsleitung (20) und/oder der Strömungserzeugungseinrichtung (30) abzweigbare Nebenströmungsleitung (40) mit zumindest einem Fluidausgang (41), wobei der Förderstrom (21) zumindest teilweise durch die Nebenströmungsleitung (40) förderbar ist. Um eine Verteilmaschine so zu gestalten, dass die Wärmeentwicklung und/oder Verschmutzung von Bauteilen (50, 51) innerhalb der Verteilmaschine in besonders einfacher weise reduziert wird, ist vorgesehen, dass der Förderstrom (21) mittels der Nebenströmungsleitung (40) und/oder des Fluidausgangs (41) zumindest teilweise in und/oder auf zumindest ein Bauteil (50, 51) förderbar ist, und dass das Bauteil (50, 51) mittels des Förderstroms (21) zumindest teilweise kühlbar und/oder reinigbar ist.

## Beschreibung

Die Erfindung betrifft eine Verteilmaschine gemäß dem Oberbegriff des Patentanspruches 1 und ein Verfahren zum Betreiben einer Verteilmaschine gemäß dem Oberbegriff des Patentanspruches 10.

In einer Vielzahl von Anwendungsfällen in der Landwirtschaft werden Verteilmaschinen zum Verteilen von granularem Material, insbesondere Saatgut und/oder Dünger, auf einer landwirtschaftlichen Fläche eingesetzt. Die Verteilmaschinen, insbesondere als pneumatische Verteilmaschinen ausgeführte Verteilmaschinen, können hierzu vorzugsweise mittels eines landwirtschaftlichen Zugfahrzeuges gezogen und/oder an einem landwirtschaftlichen Zugfahrzeug anbaubar ausgeführt sein. Das granulare Material ist aus zumindest einem Vorratsbehälter über zumindest eine einstellbare Dosiereinrichtung und/oder zumindest eine pneumatisch beaufschlagbare Förderleitung, insbesondere Hauptströmungsleitung, wenigstens einem Verteiler, insbesondere Verteilerkopf, und/oder wenigstens einer Ausbringeinrichtung, insbesondere Vereinzelungseinrichtung und/oder einem Schar, zuführbar und von dem Verteiler und/oder der Ausbringeinrichtung auf der landwirtschaftlichen Fläche ausbringbar.

Typischerweise umfassen derartige Verteilmaschinen, wie in der DE 10 2015 105 919 A1 beschrieben, zum Betreiben der Verteilmaschine zumindest eine, vorzugsweise an der Verteilmaschine angeordnete und mit der Hauptströmungsleitung gekoppelte, Strömungserzeugungseinrichtung, insbesondere ein Gebläse. Die Strömungserzeugungseinrichtung ist dazu eingerichtet, einen Fluid, insbesondere Luft, aus der Umgebung der Verteilmaschine anzusaugen und das Fluid in Form eines, vorzugsweise einstellbaren, Förderstroms der Hauptströmungsleitung zuzuführen. Das granulare Material ist somit mittels des Förderstroms, vorzugsweise in Form einer Mehrphasenströmung, durch die Hauptströmungsleitung förderbar. Darüber hinaus ist zum Betreiben der Verteilmaschine der Förderstrom zumindest teilweise durch eine von der Strömungserzeugungseinrichtung und/oder der Hauptströmungsleitung abzweigbaren Nebenströmungsleitung förderbar. Nachteilig an den bisherigen Verteilmaschinen ist insbesondere die Wärmeentwicklung einzelner Bauteile, insbesondere betriebener Aggregate und/oder Baugruppen, die zumindest eine eigene Wärmequelle aufweisen und/oder im Bereich zumindest einer Wärmequelle angeordnet sind. Darüber hinaus ist das Bauteil, insbesondere eine Oberfläche des Bauteils, durch Reibungen mit in Kontakt kommender Betriebsmittel und/oder dem granularem Material erwärmbar. Eine zu hohe Erwärmung der Bauteile kann somit zumindest zu einer beeinträchtigten Funktion und/oder einem Ausfall einzelner Bauteile und/oder der gesamten Verteilmaschine führen.

Darüber hinaus ist die Verteilmaschine, insbesondere die einzelnen Bauteile der Verteilmaschine, während des Betriebs auf einer landwirtschaftlichen Fläche Verschmutzungen und/oder äußeren Witterungsbedingungen ausgesetzt. Hierbei können sich Verunreinigungen in Form von einzelnen, insbesondere festen und/oder flüssigen, Partikeln auf und/oder im Bauteil absetzen und das Bauteil mit der Zeit stark verschmutzen. Dies kann wiederrum dazu führen, dass die Funktion einzelner Bauteile beeinträchtigt und/oder die Wärmeentwicklung durch die zusätzliche Schmutzschicht auf der Oberfläche des Bauteils verstärkt wird.

Mittels der im Stand der Technik genannten Lösung der Verteilmaschine ist zwar auf der einen Seite eine Druckluftbeaufschlagung der Nebenströmungsleitung und/oder des inneren eines Bauteils realisierbar, jedoch eignet sich die hier beschriebene Vorrichtung, insbesondere aufgrund der sehr geringen Förderströme, nicht zu einem ausreichenden Abtransport von Wärme und/oder Verschmutzungen.

Die der Erfindung zugrunde liegende Aufgabe besteht somit darin, eine Verteilmaschine so zu gestalten, dass die Wärmeentwicklung und/oder Verschmutzung von Bauteilen innerhalb der Verteilmaschine in besonders einfacher Weise reduziert wird.

Diese Aufgabe wird erfindungsgemäß dadurch gelöst, dass der Förderstrom mittels der Nebenströmungsleitung und/oder des Fluidausgangs zumindest teilweise in und/oder auf zumindest ein Bauteil förderbar ist, und dass das Bauteil mittels des Förderstroms zumindest teilweise kühlbar und/oder reinigbar ist.

Infolge dieser Maßnahme ist unter anderem die innerhalb und/oder im Bereich des zumindest einen Bauteils erwärmbare und/oder anstaubare Luft zumindest teilweise mittels des Förderstroms transportierbar. Der zumindest eine Teil des Förderstroms, der in und/oder auf das Bauteil förderbar ist, ist hierbei dazu eingerichtet, die in dem Bauteil und/oder im Bereich des Bauteils gegenüber der Umgebung erwärmbare Luft zumindest teilweise aus dem Bereich des Bauteils, insbesondere der Verteilmaschine, zu überführen. Der somit erreichbare Luftaustausch innerhalb und/oder im Bereich des Bauteils führt zu einer zumindest verlangsamten Erwärmung oder zur zumindest teilweisen Abkühlung des von dem Förderstrom angeströmten Bauteils. Zur zusätzlichen Verstärkung der Bauteilkühlung sind die Nebenströmungsleitung und/oder der darin geförderte Förderstrom zumindest teilweise durch ein Kühlorgan kühlbar. Dies ist insbesondere dann von Vorteil, wenn die Verteilmaschine in einer besonders warmen Umgebung eingesetzt wird, bei der eine ausreichende Kühlung mittels der Umgebungsluft nicht mehr erreichbar ist.

Darüber hinaus ist der Förderstrom dazu eingerichtet, Verunreinigungen, beispielsweise Staub, Ackerboden und/oder Wasser, zumindest teilweise von dem Bauteil, insbesondere zumindest einer Oberfläche, zu lösen und/oder abzuweisen. Infolge der Abweisung von Verunreinigungen, mittels des Förderstroms, ist außerdem eine zumindest teilweise Verzögerung der Bauteilverschmutzung erreicht. Somit ist neben der Steigerung der Einsatzzeit und/oder Betriebssicherheit der Verteilmaschine außerdem die in bestimmten zeitlichen Intervallen erforderliche Reinigung, insbesondere von Bauteilen in stark verschmutzungsgefährdeten Bereichen, zumindest teilweise vereinfacht und/oder sogar nicht weiter erforderlich.

Der Förderstrom ist erfindungsgemäß durchgehend oder bedarfsweise, insbesondere in Abhängigkeit der Erwärmung und/oder Verschmutzung, auf dem Bauteil aufbringbar. Hierzu ist zumindest eine Messeinrichtung denkbar, die dem zumindest einen Bauteil zugeordnet und/oder vorzugsweise im Bereich des Bauteils angeordnet ist. Die Messvorrichtung kann hierbei beispielsweise als ein berührungsfreier, insbesondere optischer, Sensor und/oder Temperatursensor, zur Erfassung der Verschmutzung und/oder Temperatur der Luft und/oder des Bauteils, ausgebildet sein. Der Förderstrom ist somit automatisiert, beispielsweise nach dem Überschreiten eines vorgegebenen Grenzwertes eines Messsignals der Messvorrichtung, in und/oder auf das Bauteil förderbar. Alternativ oder zusätzlich ist eine durch den Bediener ausführbare Zu- oder Abschaltung des Förderstroms denkbar. Die Temperatur der Luft und/oder der Verschmutzungsgrad einer bauteilnahen Umgebung und/oder des Bauteils selbst sind vorzugsweise über eine Anzeige für den Bediener visuell darstellbar. Durch die bedarfsgerechte Förderung des Förderstroms ist eine besonders energiesparende Ausführung der erfindungsgemäßen Verteilmaschine erreicht.

Zusätzlich ist eine der Strömungserzeugungseinrichtung zugeordnete Steuerungs- und/oder Regeleinrichtung bevorzugt mittels der der Förderstrom automatisiert und/oder manuell durch den Bediener einstellbar ist. Hierbei ist insbesondere die Leistungsaufnahme der zumindest einen Strömungserzeugungseinrichtung regelbar. Der Förderstrom, insbesondere die Fördergeschwindigkeit und/oder das Fördervolumen, ist somit je nach Bedarf, insbesondere je nach Wärme- und/oder Verschmutzungsgrad, von der Steuerungs- und/oder Regelungseinrichtung und/oder dem Bediener anpassbar. Die Strömungserzeugungseinrichtung, insbesondere das Gebläse, ist hierbei beispielsweise als ein Axial- oder vorzugsweise Radialgebläse ausführbar.

In einer bevorzugten Ausführungsform der erfindungsgemäßen Verteilmaschine ist das zumindest eine Bauteil von dem Förderstrom zumindest teilweise umströmbar und/oder durchströmbar, wobei sich auf dem Bauteil absetzbare feste und/oder flüssige Partikel, insbesondere Staub und/oder Wasser, mittels des Förderstroms zumindest teilweise von einer Oberfläche des Bauteils abtragbar sind. Der Förderstrom im wandnahen Bereich und/oder die fluiddynamische Grenzschicht der um- und/oder durchströmbaren Oberflächen sind dabei derartig ausgeprägt, dass die auf der Oberfläche absetzbaren Partikel mittels des Förderstroms abweisbar sind. Partikel die in einem Abstand zur Oberfläche des Bauteils vom Förderstrom erfassbar sind, sind insbesondere mittels der zwischen dem Förderstrom und den Partikeln wirkenden Auftriebs- und/oder Widerstandskräfte zumindest teilweise mit dem Förderstrom mittragbar. Darüber hinaus sind auf dem Bauteil haftende Partikel zumindest teilweise mittels des Förderstroms, insbesondere mittels der wirkenden Schubspannungen im wandnahen Bereich und/oder der Grenzschicht, ablösbar. Der Förderstrom, insbesondere das strömende Fluid, ist dazu eingerichtet, vom Förderstrom erfasste Partikel im Wesentlichen in Strömungsrichtung des Förderstroms, vorzugsweise aus dem Bereich des zumindest einen Bauteils, zu tragen. Zur Erhöhung und/oder Verbesserung des Reinigungseffektes sind insbesondere die Schubspannung zwischen dem Förderstrom und dem Bauteil entlang der anströmbaren Bauteiloberfläche durch eine Erhöhung der Durch- und/oder Umströmungsgeschwindigkeit des Förderstroms erreichbar. Somit ist mittels eines hohen Förderstroms eine besonders gute Ablösung von stark anhaftenden Partikeln realisierbar.

Darüber hinaus sind neben festen Partikeln in Form von Verschmutzungen außerdem flüssige Partikel in Form von beispielsweise Wasser von der Oberfläche des Bauteils ablösbar und/oder abweisbar. Somit ist neben der Kühlung und/oder Reinigung des Bauteils außerdem eine Trocknung zumindest eines Bauteils innerhalb der erfindungsgemäßen Verteilmaschine erreicht.

Außerdem umfasst das Bauteil zur Durchströmung bevorzugt zumindest eine Öffnung in die der durch die Nebenströmungsleitung und/oder den Fluidausgang geförderte Förderström zumindest teilweise einbringbar ist. In vorteilhafter Weise umfasst das zumindest eine Bauteil zumindest eine weitere Öffnung mittels der der einbringbare Förderstrom zumindest teilweise aus dem Bauteil ausbringbar ist. Mittels dieser Anordnung ist das zumindest eine Bauteil alternativ und/oder zusätzlich zur äußerlichen Kühlung und/oder Reinigung von innen kühl- und/oder reinigbar. Somit ist die effektiv kühl- und/oder reinigbare Oberfläche des Bauteils vergrößert und der Kühl- und/oder Reinigungseffekt verstärkt.

In einer Weiterbildung der erfindungsgemäßen Verteilmaschine ist zumindest ein Fluidausgang als eine Düse ausgebildet und/oder umfasst zumindest eine daran angeordnete Düse. Der Fluidausgang und somit die Düse sind hierbei im Bereich des Bauteils angeordnet und/oder in Richtung des Bauteils ausgerichtet. Mittels des somit düsenförmig ausgebildeten Austritts des Förderstroms ist die Strömungsgeschwindigkeit lokal, insbesondere kurz vor dem Anströmen des Bauteils, erhöhbar. Mittels dieser Ausgestaltung ist der Querschnitt der Nebenströmungsleitung, vorzugsweise bis zum Fluidausgang und/oder Düse, besonders groß auslegbar, womit Verluste, insbesondere Reibungsverluste, aufgrund hoher Strömungsgeschwindigkeiten, insbesondere in einem wandnahen Bereich, minimierbar sind. Dementsprechend ist infolge dieser Ausführungsform eine besonders kleine und/oder effiziente Strömungserzeugungseinrichtung realisierbar.

In einer anderen bevorzugten Ausführungsform der erfindungsgemäßen Verteilmaschine ist in Strömungsrichtung des Förderstroms vor der Strömungserzeugungseinrichtung zumindest ein erstes Filter- und/oder Abscheideelement angeordnet, wobei das erste Filter- und/oder Abscheideelement zumindest teilweise mit der Strömungserzeugungseinrichtung koppelbar ist. Das Filter- und/oder Abscheideelement ist dazu eingerichtet, Feststoffe aus der von der Strömungserzeugungseinrichtung ansaugbaren Umgebungsluft zumindest teilweise vor dem Ansaugen in die Strömungserzeugungseinrichtung zurück zu halten. Ein zusätzlicher Verschmutzungs- und/oder Verschleißeffekt auf innerhalb der Nebenströmungsleitung und/oder des Bauteils angeordneter Komponenten, durch Feststoffe und/oder Partikel innerhalb des Förderstroms sind somit nahezu vollständig vermeidbar. Der so zur Kühlung, Reinigung und/oder Trocknung verwendbare Förderstrom aus der Nebenströmungsleitung ist somit auch für besonders kritische und/oder empfindliche Bauteile, beispielsweise elektronische Bauteile, innerhalb der Verteilmaschine verwendbar. Zusätzlich ist mittels dieser Anordnung eine Filterung und/oder Abscheidung von flüssigen Partikeln, insbesondere Wasser, erreichbar. Somit sind auf der einen Seite insbesondere elektronische Bauteile vor beispielsweise Kurzschlüssen und auf der anderen Seite mechanische Bauteile vor beispielsweise Korrosion besonders gut schützbar.

In einer anderen Weiterbildung der erfindungsgemäßen Verteilmaschine ist im Bereich der Abzweigung und/oder in der Nebenströmungsleitung zumindest ein zweites Filter- und/oder Abscheideelement angeordnet. Das zumindest eine zweite Filter- und/oder Abscheideelement ist hierbei alternativ oder zusätzlich zum ersten Filter- und/oder Abscheideelement verwendbar. Das zumindest eine zweite Filter und/oder Abscheideelement ist dazu eingerichtet, von der Strömungserzeugungseinrichtung in die Haupt- und/oder Nebenströmungsleitung einleitbare Feststoffe zumindest teilweise zurück zu halten. Bei einer parallelen Verwendung der ersten und zweiten Filter- und/oder Abscheideelemente ist die Filterklasse des zumindest einen zweiten Filter- und/oder Abscheideelementes zumindest gleich oder vorzugsweise feiner als die des zumindest einen ersten Filter- und/oder Abscheideelementes. Infolge dieser Maßnahme ist ein besonders reiner Förderstrom zur Kühlung und/oder Reinigung des zumindest einen Bauteils erzielt. Darüber hinaus bietet sich bei dieser Ausführungsform der Vorteil, dass nur der Teil des Förderstroms mittels des zumindest einen zweiten Filter- und/oder Abscheideelementes filterbar ist der durch die Nebenströmungsleitung in Richtung des Bauteils gefördert wird. Somit ist eine besonders effiziente Filteranordnung mit einem besonders langem Filterintervall und gutem Filterungsergebnis erreichbar.

Neben mechanischen Filtern, die insbesondere nach dem Siebprinzip ausgebildet sind, ist außerdem die Verwendung von elektrostatischen Filtern als Filterelement denkbar. Darüber hinaus werden erfindungsgemäß Zentrifugal-, Massenkraft-, und/oder Trägheitsabscheider als Abscheideelemente verstanden.

In einer weiteren bevorzugten Ausführungsform der erfindungsgemäßen Verteilmaschine ist im Bereich der Abzweigung und/oder in der Nebenströmungsleitung zumindest ein Stellorgan angeordnet, wobei der Förderstrom, insbesondere die Strömungsgeschwindigkeit und/oder der Volumenstrom, innerhalb der Nebenströmungsleitung mittels des zumindest einen Stellorgans zumindest teilweise einstellbar ist. Das Stellorgan ist hierbei derartig ausgebildet und/oder angeordnet, dass der Förderstrom in einer geöffneten Stellung des Stellorgans zumindest teilweise durch das Stellorgan förderbar ist. Das Stellorgan ist bevorzugt zwischen einer vollständig geöffneten und geschlossenen Stellung in zumindest einer weiteren Stellung verbringbar. Das Stellorgan ist automatisiert mittels einer Steuer- und/oder Regeleinrichtung und/oder manuell durch den Bediener steuer- und/oder regelbar.

Darüber hinaus ist das Stellorgan dazu eingerichtet, den Förderstrom in nahezu beliebigen Zeitabständen, vorzugsweise sehr kleinen und/oder regelmäßigen zeitlichen Abständen, zu unterbrechen. Insbesondere der Druck innerhalb der Nebenströmungsleitung ist somit mittels des, vorzugsweise kurzzeitig, geschlossenen Stellorgans erhöhbar. Der Förderstrom ist infolge dieser Maßnahme bevorzugt in Form von Druckluftstößen, insbesondere einzelner Luft-"Pakete", auf das zumindest eine Bauteil förderbar. Diese Ausführungsform ist bevorzugt durch zumindest eine Drucksensoreinrichtung erweiterbar die der Nebenströmungsleitung zugeordnet ist, wobei der Druck innerhalb der Nebenströmungsleitung zumindest teilweise steuer- und/oder regelbar ist.

In einer weiteren Weiterbildung der erfindungsgemäßen Verteilmaschine weist die Hauptströmungsleitung zumindest eine Zusatzöffnung auf, wobei das granulare Material, vorzugsweise in einstellbaren Mengen, durch die Zusatzöffnung in die Hauptströmungsleitung zuführbar ist. Die Zuführung ist hierbei bevorzugt mittels einer einstellbaren Dosiereinrichtung die der Zusatzöffnung zugeordnet ist ausführbar. Die Dosiereinrichtung kann hierbei direkt über der Zusatzöffnung und/oder zumindest zum Teil innerhalb der Hauptströmungsleitung angeordnet sein. Darüber hinaus kann ein erster Teil und zumindest ein weiterer Teil der Hauptströmungsleitung an unterschiedlichen Positionen an der Dosiereinrichtung koppelbar sein, sodass die Hauptströmungsleitung mittels der Dosiereinrichtung zumindest an einer Stelle zumindest teilweise unterbrochen ist. Mittels dieser Anordnung ist das bevorratete Material aus dem Vorratsbehälter zumindest teilweise über die zumindest eine Dosiereinrichtung in die zumindest eine Hauptströmungsleitung einleitbar. Der von der Strömungserzeugungseinrichtung erzeugte Förderstrom, zur Förderung des einleitbaren Materials, ist typischerweise derartig ausgelegt, dass hierbei sehr hohe Strömungsgeschwindigkeiten und/oder Volumenströme erzeugbar sind. Somit sind die zum Betreiben der pneumatischen Verteilmaschine benötigten Förderströme neben der Nutzung für den Materialtransport in vorteilhafter Weise für die Kühlung, Reinigung und/oder Trocknung der Bauteile verwendbar, sodass eine zusätzliche Erhöhung der Förderströme innerhalb der Nebenströmungsleitung nicht erforderlich ist. Somit ist mittels eines besonders einfachen Aufbaus, ein besonders gutes Kühl- und/oder Reinigungsergebnis mittels des Förderstroms an dem zumindest einem Bauteil erreichbar.

Darüber hinaus ist eine erfindungsgemäße Verteilmaschine bevorzugt bei der die Abzweigung der Nebenströmungsleitung in Strömungsrichtung des Förderstroms vor der Zusatzöffnung angeordnet ist. Die Abzweigung ist hierbei zwischen der zumindest einen Strömungserzeugungseinrichtung und der zumindest einen Zusatzöffnung, vorzugsweise vor der Zuführung des granularen Materials, angeordnet. Der Förderstrom ist hierbei vor der Zusatzöffnung und/oder der Dosiereinrichtung in die Nebenströmungsleitung umlenkbar, womit gleichzeitig das geförderte Volumen und/oder die Geschwindigkeit des Förderstroms der durch die Hauptströmungsleitung, insbesondere durch die Dosiereinrichtung und/oder das granulare Material, förderbar ist, im Wesentlichen reduzierbar. Infolge dieser Maßnahme resultieren hieraus geringere Strömungsgeschwindigkeiten im wandnahen Bereich und damit geringere Reibungs- bzw. Druckverluste innerhalb der Strömung. Außerdem hat die Förderung eines geringeren Volumenstroms den Vorteil, dass die Strömungsverluste aufgrund von Querschnittsverengungen, beispielsweise durch die Dosiereinrichtung, in der Hauptströmungsleitung stark beschränkbar sind. Diese Ausführungsform zeichnet sich somit durch eine besonders hohe Effizienz mit besonders geringen Strömungs- und/oder Druckverlusten aus.

Da bei dieser Anordnung ein Eintritt des granularen Materials in die Abzweigung und/oder Nebenströmungsleitung nahezu ausgeschlossen ist, ist somit eine besonders reine Zuführung des Förderstroms in die Nebenströmungsleitung, insbesondere zum Bauteil erzielbar. Außerdem ist hiermit eine Filteranordnung des ersten und/oder zweiten Filter- und/oder Abscheideelementes besonders einfach aufbaubar.

In einer anderen bevorzugten Ausführungsform der erfindungsgemäßen Verteilmaschine ist das zumindest eine Bauteil als eine Baugruppe, die zumindest eine elektronische und/oder, vorzugsweise bewegliche, mechanische Komponente umfasst, ausgebildet. Bei den Baugruppen kann es sich hierbei um Komponenten mit einem komplexen Aufbau, beispielsweise mit einzelnen und/oder besonders kleinen elektronischen und/oder beweglichen mechanischen Bauteilen, handeln. Der Förderstrom ist hierbei dazu eingerichtet, alternativ und/oder zusätzlich die besonders kleinen Zwischenräume und/oder Oberflächen, insbesondere innerhalb des Bauteils und/oder der Baugruppe an- und/oder durchzuströmen. Somit ist neben einer indirekten Kühlung eines Bauteils und/oder Baugruppe, bei der im Wesentlichen das Außengehäuse anströmbar ist, eine direkte Kühlung der, insbesondere wärmeerzeugenden, Bauteile durch direkte An- und/oder Umströmung erreichbar. Das Bauteil und/oder die Baugruppe umfassen hierbei bevorzugt zumindest eine Öffnung, wobei der Förderstrom mittels der Öffnung zumindest teilweise in das Bauteil und/oder die Baugruppe einleitbar ist. Besonders vorteilhaft ist ein Bauteil und/oder Baugruppe die zumindest eine weitere Öffnung umfasst, wobei der einleitbare Förderstrom zumindest teilweise mittels der zumindest einen weiteren Öffnung aus dem Bauteil und/oder der Baugruppe förderbar ist. Neben der Kühlung der Baugruppe, insbesondere der einzelnen Bauteile, ist somit eine Reinigung, insbesondere im inneren, der Baugruppe realisierbar. Mittels dieser Ausführungsform ist mit dem durch die Nebenströmungsleitung geförderten Förderstroms eine besonders hohe Kühl- und/oder Reinigungsleistung des zumindest einen Bauteils und/oder der zumindest einen Baugruppe erreicht.

Besonders vorteilhaft für eine materialschonende Kühlung und/oder Reinigung der Baugruppe, ist ein durch besonders feine Filter- und/oder Abscheideelemente gefilterter Förderstrom, der dazu eingerichtet ist, beispielsweise elektronische Platinen zu reinigen und/oder zu kühlen.

Darüber hinaus ist das zumindest eine Bauteil der erfindungsgemäßen Verteilmaschine als ein Blechteil und/oder als zumindest ein Gehäuseteil einer Baugruppe ausführbar.

Die der Erfindung zugrunde liegende Aufgabe wird ferner durch ein Verfahren zum Betreiben der beschriebenen landwirtschaftlichen Verteilmaschine gelöst, wobei das Verfahren zumindest den folgenden Schritt umfasst:
- Kühlen und/oder Reinigen eines Bauteils mittels des zumindest einen durch die Nebenströmungsleitung geförderten Förderstroms,
wobei der Förderstrom mittels der Nebenströmungsleitung und/oder des Fluidausgangs zumindest teilweise in und/oder auf das Bauteil gefördert wird.

Hinsichtlich der Vorteile und Modifikationen des erfindungsgemäßen Verfahrens zum Betreiben einer Verteilmaschine wird zunächst auf die Vorteile und Modifikationen der erfindungsgemäßen Verteilmaschine verwiesen.

Bei einer besonders bevorzugten Ausführungsform des erfindungsgemäßen Verfahrens werden feste und/oder flüssige Partikel, insbesondere Staub und/oder Wasser, zumindest teilweise vor dem Berühren einer Oberfläche des zumindest einen Bauteiles von dem Förderstrom, vorzugsweise in eine von dem Bauteil abweisenden Richtung, mitgetragen. Die Strömungserzeugungseinrichtung und/oder die Nebenströmungsleitung sind dazu eingerichtet, den Förderstrom über einen bestimmten, vorzugsweise einstellbaren, zeitlichen Abstand auf und/oder in das Bauteil zu fördern. Partikel die sich zumindest im Bereich des angeströmten und/oder umströmten Bauteils befinden werden hierbei zumindest teilweise von dem Förderstrom erfasst. Der die Oberfläche umströmende Förderstrom, insbesondere das Fluid, generiert hierbei, insbesondere in der Grenzschicht, eine auf die Partikel wirkende Kraft. Wenn die Kraft, insbesondere Auftriebs- und/oder Widerstandskraft, zwischen dem Förderstrom, insbesondere Fluid, und den Partikeln größer und/oder gleich der Gewichtskraft der Partikel ist, werden die Partikel zumindest teilweise vom Förderstrom mitgetragen. Neben Verschmutzungen können somit außerdem flüssige Partikel vor dem Auftreffen auf dem Bauteil von dem Förderstrom abgewiesen werden.

Ferner ist ein erfindungsgemäßes Verfahren vorteilhaft, bei welchem das granulare Material in die zumindest eine Hauptströmungsleitung durch zumindest eine Zusatzöffnung dosiert und/oder zugeführt wird. Die zumindest eine Zusatzöffnung ist dabei an der zumindest einen Hauptströmungsleitung angeordnet. Eine Dosiereinrichtung, die der Zusatzöffnung zugeordnet ist, fördert das granulare Material, vorzugsweise in einstellbaren Mengen, aus dem Vorratsbehälter in die zumindest eine Hauptströmungsleitung. Das eingeleitete granulare Material wird innerhalb der Hauptströmungsleitung zumindest teilweise von dem Förderstrom erfasst und beispielsweise in Richtung eines Verteilers und/oder einer Ausbringeinrichtung, zur Ausbringung auf einer landwirtschaftlichen Fläche, gefördert. Zusätzlich wird der Förderstrom, vorzugsweise in Strömungsrichtung vor der Zusatzöffnung, zumindest teilweise durch die Abzweigung in die die Nebenströmungsleitung umgelenkt. Durch die Nebenströmungsleitung und/oder den Fluidausgang wird der Förderstrom auf zumindest einem Bauteil und/oder einer Baugruppe zur Kühlung, Reinigung und/oder Trocknung aufgebracht. Der Förderstrom, insbesondere die Fördergeschwindigkeit und/oder das Fördervolumen, wird mittels der Strömungserzeugungseinrichtung soweit erhöht, bis die resultierenden Kräfte zwischen des Förderstroms und der Bauteiloberfläche so groß sind, dass zumindest ein Teil der darauf abgesetzten Verunreinigungen, insbesondere feste und/oder flüssige Partikel, sich zumindest teilweise von der Oberfläche lösen und von dem Förderstrom mitgetragen werden.

Weitere Einzelheiten der Erfindung sind der Beispielsbeschreibung und den Zeichnungen zu entnehmen. Die Zeichnungen zeigen
- Fig.1: zeigt eine schematische Ansicht einer ersten Ausführungsform einer erfindungsgemäßen landwirtschaftlichen Verteilmaschine; und
- Fig.2: zeigt eine schematische Ansicht einer weiteren Ausführungsform einer erfindungsgemäßen landwirtschaftlichen Verteilmaschine.

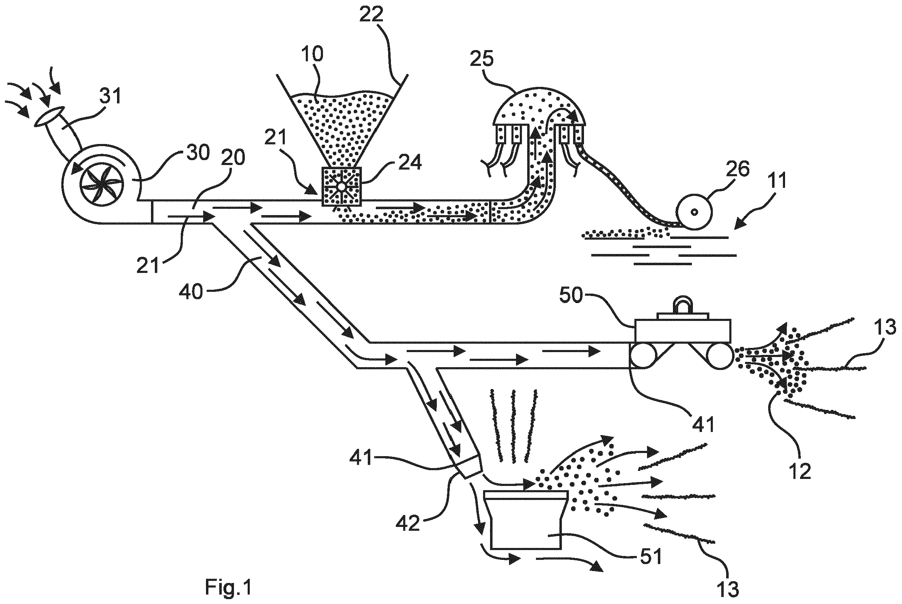

Eine pneumatisch betriebene Verteilmaschine zum Ausbringen von granularem Material 10, insbesondere Saatgut und/oder Dünger, auf einer landwirtschaftlichen Fläche 11 ist in einer schematischen Ansicht in Fig. 1 gezeigt. Die Verteilmaschine umfasst neben einem Verteiler 25, insbesondere Verteilerkopf, zumindest eine fluidtechnisch daran gekoppelte Ausbringeinrichtung 26 die als ein Scheibenschar ausgebildet und dazu eingerichtet ist, dass granulare Material 10 auf der landwirtschaftlichen Fläche 11 abzulegen.

Das granulare Material 10 ist von einem trichterförmigen Vorratsbehälter 23 über eine daran angeordnete Dosiereinrichtung 24 einer Hauptströmungsleitung 20 zuführbar, wobei die Dosiereinrichtung 24 mittels einer an der Hauptströmungsleitung 20 ausgebildeten Zusatzöffnung 22 mit der Hauptströmungsleitung 20 gekoppelt ist. Das in einstellbaren Mengen zuführbare Material 10 ist innerhalb der Hauptströmungsleitung 20 durch einen Förderstrom 21, insbesondere ein Fluid, zum Verteiler 25 und/oder der Ausbringeinrichtung 26 in Form einer Mehrphasenströmung förderbar. Der Förderstrom 21 ist hierbei von einer mit der Hauptströmungsleitung 20 gekoppelten Strömungserzeugungseinrichtung 30, insbesondere einem als Radialgebläse ausgebildeten Gebläse, in einstellbaren Mengen generierbar. Hierzu umfasst die Strömungserzeugungseinrichtung 30 eine Fluidansaugung 31, mittels der die Umgebungsluft, insbesondere das Fluid, von einem innerhalb der Strömungserzeugungseinrichtung 30 rotierbaren Rotor ansaugbar und in die Hauptströmungsleitung 20 einleitbar ist.

Darüber hinaus umfasst die Verteilmaschine eine von der Hauptströmungsleitung 20 abzweigbare Nebenströmungsleitung 40. Mittels einer in Strömungsrichtung vor der Zusatzöffnung 22 abzweigenden Nebenströmungsleitung 40 ist ein besonders reiner Förderstrom 21, insbesondere Fluid, in die Nebenströmungsleitung 40 einleitbar. Der Förderstrom 21 ist somit zusätzlich durch die Nebenströmungsleitung 40 hin zu zumindest einem Fluidausgang 41 förderbar. Über die Nebenströmungsleitung 40 und/oder den Fluidausgang 41 ist der Förderstrom 21 zumindest teilweise auf und/oder in zumindest ein Bauteil 50, 51 förderbar, wobei das zumindest eine Bauteil 50, 51 mittels des Förderstroms 21 kühl- und/oder reinigbar ist. Ein Ende der Nebenströmungsleitung 40, insbesondere der Fluidausgang 41, ist hierbei derartig dem zumindest einen Bauteil 50, 51 zugeordnet, dass das Bauteil 50, 51 zumindest teilweise vom Förderstrom 21 um- und/oder durchströmbar ist. Somit sind feste und/oder flüssige Partikel 12, insbesondere Staub und/oder Wasser, mittels des Förderstroms 21 zumindest teilweise von einer Oberfläche des zumindest einen Bauteils 50, 51 abtragbar. Darüber hinaus ist das zumindest eine Bauteil 50, 51 durch das Mittragen des erwärmten Fluids 13, insbesondere der erwärmten Luft, im Bereich und/oder innerhalb des zumindest einen Bauteils 50, 51 mittels des Förderstroms 21 zumindest teilweise kühlbar. Das Bauteil 50, 51 kann als eine Baugruppe, die zumindest eine elektronische und/oder, vorzugsweise bewegliche, mechanische Komponente umfasst, ausgebildet sein. Der Förderstrom 21 ist hierbei derartig auf und/oder in der Baugruppe leitbar, dass dieser die, insbesondere wärmeerzeugenden, elektronischen und/oder mechanischen Komponenten zumindest teilweise um- und/oder durchströmt. Somit ist eine besonders effektive Kühlung und/oder Reinigung des zumindest einen Bauteils 50, 51 mittels des Förderstroms 21 erreichbar. Außerdem kann unter dem Bauteil 50, 51 ein aus Blechteilen zusammensetzbare Baugruppe und/oder eine Umhausung verstanden werden.

Darüber hinaus ist durch die Ablösung und/oder Abweisung flüssiger Partikel 12, insbesondere Wasser, eine Trocknung des zumindest einen Bauteils 50, 51, insbesondere zumindest einer Oberfläche des Bauteils 50, 51, realisierbar.

Des Weiteren umfasst zumindest ein Fluidausgang 41 zur Erhöhung der Fördergeschwindigkeit des Förderstroms 21 am Bauteil 50, 51 zumindest eine daran angeordnete Düse 42. Alternativ kann der Fluidausgang 41 düsenförmig, insbesondere als eine Düse 42, ausgebildet sein.

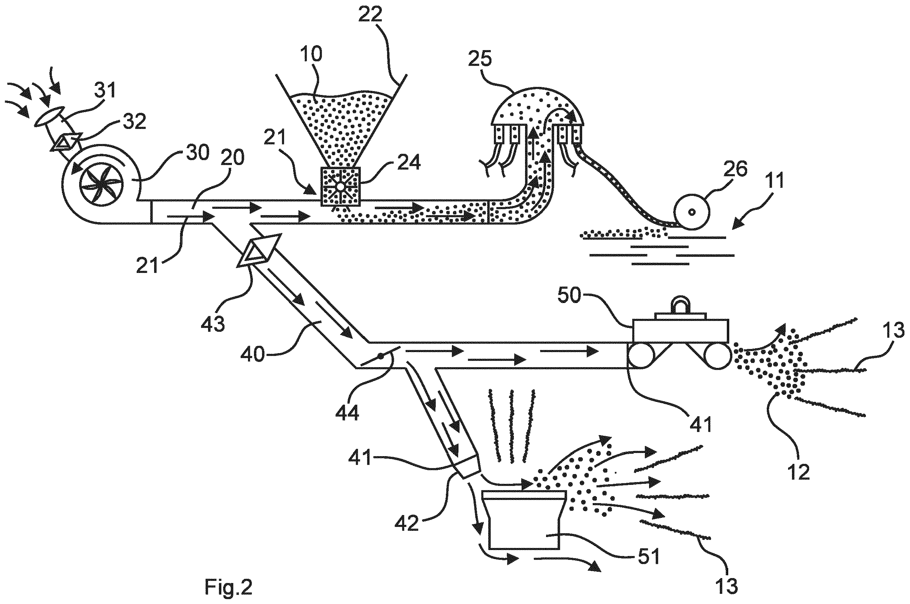

Die Fig. 2 zeigt eine weitere Ausführungsform der pneumatischen Verteilmaschine in einer schematischen Ansicht. Diese umfasst zumindest ein erstes Filter- und/oder Abscheideelement 32 das, insbesondere im Bereich der Fluidansaugung 31, zumindest teilweise mit der Strömungserzeugungseinrichtung 30 verbunden ist. Die ansaugbare Umgebungsluft ist hierbei zumindest teilweise durch das Filter- und/oder Abscheideelement 32 durchleitbar. In der Umgebungsluft enthaltene Verunreinigungen und/oder Partikel 12 sind somit zumindest teilweise im Bereich des Filter- und/oder Abscheideelementes 32 zurückhaltbar. Das Filter- und/oder Abscheideelement 32 kann hierbei beispielsweise als Kombination aus einem Luftfilter und einem Fliehkraft- und/oder Massekraftabscheider ausgebildet sein. Somit ist ausgehend von der Strömungserzeugungseinrichtung 30 durch die Hauptströmungsleitung 20 bis zur Ausbringeinrichtung 26 ein besonders reiner Förderstrom 21 erreichbar. Mittels des somit filterbaren Förderstroms 21 sind die Bauteile 50, 51, insbesondere die einzelnen sehr empfindlichen Komponenten der Bauteile 50, 51, vor Verschmutzungen und/oder mechanischem Verschleiß infolge durchströmbarer Partikel 12, besonders gut schützbar.

Des Weiteren umfasst die Verteilmaschine zumindest ein zweites Filter und/oder Abscheideelement 43 das im Bereich der Abzweigung und/oder innerhalb der Nebenströmungsleitung 40 angeordnet ist. Das zumindest eine zweite Filter- und/oder Abscheideelement 43 ist dazu eingerichtet, den durch die Nebenströmungsleitung 40, insbesondere den zu den Bauteilen 50, 51, förderbaren Förderstrom 21, insbesondere die darin transportierbaren Partikel 12, zumindest teilweise zu filtern und/oder abzuscheiden. Bei einer gleichzeitigen Verwendung der ersten und zweiten Filter- und/oder Abscheideelemente 32, 43 weist das zumindest eine zweite Filter- und/oder Abscheideelement 43 zumindest die gleiche, vorzugsweise eine feinere, Filterklasse als das zumindest eine erste Filter- und/oder Abscheideelement 32 auf. Infolge dieser Anordnung ist eine nochmals gesteigerte Reinheit des zu den Bauteilen 50, 51 geförderten Förderstroms 21 erreichbar, womit elektronische Komponenten, insbesondere Platinen, zumindest eines Bauteils 50, 51 besonders gut kühl- und/oder reinigbar sind.

Außerdem ist zur zumindest teilweisen Steuer- und/oder Regulierung des Förderstroms 21 zumindest ein Stellorgan 44 innerhalb der Nebenströmungsleitung 40 angeordnet. Alternativ und/oder zusätzlich ist eine Anordnung zumindest eines weiteren Stellorgans 44 im Bereich der Abzweigung und/oder des zumindest einen Fluidausgangs 41 denkbar. Das mittels eines Aktors angetriebene Stellorgan 44 ist derartig angeordnet, dass der Förderstrom 21 zumindest teilweise durch das Stellorgan 44 strömbar ist, wobei das Stellorgan 44 dazu eingerichtet ist, den Förderstrom 21, insbesondere innerhalb der Nebenströmungsleitung 40 und/oder des zumindest einen Bauteils 50, 51, zumindest teilweise zu vergrößern und/oder zu verkleinern. Hierzu ist das Stellorgan 44 so ausgebildet, dass dieses in einer geöffneten und/oder geschlossenen Stellung verbringbar ist. Besonders bevorzugt ist ein Stellorgan 44 das in zumindest einer weiteren Stellung, insbesondere zwischen der geöffneten und der geschlossenen Stellung, verbringbar ist. Alternativ und/oder zusätzlich ist der Förderstrom 21 hierbei über die Leistungsaufnahme der Strömungserzeugungseinrichtung 30 steuer- und/oder regelbar. Mittels eines als beispielsweise Drosselklappe ausgebildeten Stellorgans 44 ist eine besonders flexible und/oder individuelle Förderung des Förderstroms 21, vorzugsweise in Abhängigkeit der Verschmutzung und/oder Erwärmung, auf und/oder in ein Bauteil 50, 51 erreichbar.

Das Kühlen, Reinigen und/oder Trocknen des zumindest einen Bauteils 50, 51 mittels des durch die Nebenströmungsleitung 40 geförderten Förderstroms 21 ist automatisiert von einer Steuerungs- und/oder Regeleinrichtung und/oder manuell durch einen Bediener ausführbar. Hierbei kann entweder die zumindest eine Strömungserzeugungseinrichtung 30 und/oder das zumindest eine Stellorgan 44 angesteuert und/oder verstellt werden. Das Fördern des Förderstroms 21 auf das zumindest eine Bauteil 50, 51 ist hierbei durchgängig während des Betriebs der Verteilmaschine und/oder je nach Bedarf, insbesondere nach dem Verschmutzungs- und/oder Erwärmungsgrad, des zumindest einen Bauteils 50, 51 realisierbar. Darüber hinaus ist eine permanente Um- und/oder Durchströmung des zumindest einen Bauteils 50, 51 von Vorteil, so dass feste und/oder flüssige Partikel 12 bereits kurz vor dem Aufsetzen von dem Bauteil 50, 51 mittels des Förderstroms 21, vorzugsweise in eine vom Bauteil 50, 51 abweisende Richtung, weggetragen werden.

### Bezugszeichenliste

- 10: Granulares Material
- 11: Landwirtschaftliche Fläche
- 12: Partikel
- 13: Erwärmtes Fluid, erwärmte Luft
- 20: Hauptströmungsleitung
- 21: Förderstrom
- 22: Zusatzöffnung
- 23: Vorratsbehälter
- 24: Dosiereinrichtung
- 25: Verteiler
- 26: Ausbringeinrichtung
- 30: Strömungserzeugungseinrichtung
- 31: Fluidansaugung
- 32: Erstes Filter- und/oder Abscheideelement
- 40: Nebenströmungsleitung
- 41: Fluidausgang
- 42: Düse
- 43: Zweites Filter- und/oder Abscheideelement
- 44: Stellorgan
- 50: Durchströmtes Bauteil
- 51: Angeströmtes Bauteil

## Patentansprüche

1. Landwirtschaftliche pneumatische Verteilmaschine zum Verteilen von granularem Material (10), insbesondere Saatgut und/oder Dünger, auf einer landwirtschaftlichen Fläche (11) umfassend zumindest eine Hauptströmungsleitung (20) durch die ein Förderstrom (21), insbesondere Luft, und/oder das granulare Material (10), vorzugsweise in Form einer Mehrphasenströmung, förderbar sind, zumindest eine Strömungserzeugungseinrichtung (30), insbesondere ein Gebläse, die mit der Hauptströmungsleitung (20) koppelbar ist und die dazu eingerichtet ist, den, vorzugsweise einstellbaren, Förderstrom (21) zu erzeugen und diesen in die zumindest eine Hauptströmungsleitung (20) einzuleiten, und zumindest eine von der Hauptströmungsleitung (20) und/oder der Strömungserzeugungseinrichtung (30) abzweigbare Nebenströmungsleitung (40) mit zumindest einem Fluidausgang (41), wobei der Förderstrom (21) zumindest teilweise durch die Nebenströmungsleitung (40) förderbar ist, **dadurch gekennzeichnet, dass** der Förderstrom (21) mittels der Nebenströmungsleitung (40) und/oder des Fluidausgangs (41) zumindest teilweise in und/oder auf zumindest ein Bauteil (50, 51) förderbar ist, und dass das Bauteil (50, 51) mittels des Förderstroms (21) zumindest teilweise kühlbar und/oder reinigbar ist.

2. Verteilmaschine nach Anspruch 1, **dadurch gekennzeichnet, dass** das zumindest eine Bauteil (50, 51) von dem Förderstrom (21) zumindest teilweise umströmbar und/oder durchströmbar ist, dass sich auf dem Bauteil (50, 51) absetzbare feste und/oder flüssige Partikel (12), insbesondere Staub und/oder Wasser, mittels des Förderstroms (21) zumindest teilweise von einer Oberfläche des Bauteils (50, 51) abtragbar sind.

3. Verteilmaschine nach zumindest einem der vorgenannten Ansprüche, **dadurch gekennzeichnet, dass** der zumindest eine Fluidausgang (41) als eine Düse (42) ausgebildet ist und/oder zumindest eine daran angeordnete Düse (42) umfasst.

4. Verteilmaschine nach zumindest einem der vorgenannten Ansprüche, **dadurch gekennzeichnet, dass** in Strömungsrichtung des Förderstroms (21) vor der Strömungserzeugungseinrichtung (30) zumindest ein erstes Filter- und/oder Abscheideelement (32) angeordnet ist, dass das erste Filter- und/oder Abscheideelement (32) zumindest teilweise mit der Strömungserzeugungseinrichtung (30) koppelbar ist.

5. Verteilmaschine nach zumindest einem der vorgenannten Ansprüche, **dadurch gekennzeichnet, dass** im Bereich der Abzweigung und/oder in der Nebenströmungsleitung (40) zumindest ein zweites Filter- und/oder Abscheideelement (43) angeordnet ist.

6. Verteilmaschine nach zumindest einem der vorgenannten Ansprüche, **dadurch gekennzeichnet, dass** im Bereich der Abzweigung und/oder in der Nebenströmungsleitung (40) zumindest ein Stellorgan (44) angeordnet ist, dass der Förderstrom (21), insbesondere die Strömungsgeschwindigkeit und/oder der Volumenstrom, innerhalb der Nebenströmungsleitung (40) mittels des zumindest einen Stellorgans (44) zumindest teilweise einstellbar ist.

7. Verteilmaschine nach zumindest einem der vorgenannten Ansprüche, **dadurch gekennzeichnet, dass** die Hauptströmungsleitung (20) zumindest eine Zusatzöffnung (22) aufweist, dass das granulare Material (10), vorzugsweise in einstellbaren Mengen, durch die Zusatzöffnung (22) in die Hauptströmungsleitung (20) zuführbar ist.

8. Verteilmaschine nach Anspruch 7, **dadurch gekennzeichnet, dass** die Abzweigung der Nebenströmungsleitung (40) in Strömungsrichtung des Förderstroms (21) vor der Zusatzöffnung (22) angeordnet ist.

9. Verteilmaschine nach zumindest einem der vorgenannten Ansprüche, **dadurch gekennzeichnet, dass** das zumindest eine Bauteil (50, 51) als eine Baugruppe, die zumindest eine elektronische und/oder, vorzugsweise bewegliche, mechanische Komponente umfasst, ausgebildet ist.

10. Verfahren zum Betreiben einer pneumatischen Verteilmaschine nach zumindest einem der vorgenannten Ansprüche, mit den Schritten:
- Fördern eines Förderstroms (21), insbesondere Luft, und/oder des granularen Materials (10), vorzugsweise in Form einer Mehrphasenströmung, durch zumindest eine Hauptströmungsleitung (20),
- Erzeugen des, vorzugsweise einstellbaren, Förderstroms (21) mittels einer mit der Hauptströmungsleitung (20) gekoppelten Strömungserzeugungseinrichtung (30),
- Einleiten des Förderstroms (21) in die Hauptströmungsleitung (20), und
- zumindest teilweises Fördern des Förderstroms (21) und/oder des granularen Materials (10) durch eine von der Hauptströmungsleitung (20) und/oder der Strömungserzeugungseinrichtung (30) abzweigbaren Nebenströmungsleitung (40) mit zumindest einem Fluidausgang (41),
**gekennzeichnet durch den Schritt:**
- Kühlen und/oder Reinigen eines Bauteils (50, 51) mittels des zumindest einen durch die Nebenströmungsleitung (40) geförderten Förderstroms (21),
wobei der Förderstrom (21) mittels der Nebenströmungsleitung (40) und/oder des Fluidausgangs (41) zumindest teilweise in und/oder auf das Bauteil (50, 51) gefördert wird.

11. Verfahren nach Anspruch 10, **dadurch gekennzeichnet, dass** feste und/oder flüssige Partikel (12), insbesondere Staub und/oder Wasser, zumindest teilweise vor dem Berühren einer Oberfläche des zumindest einen Bauteils (50, 51) von dem Förderstrom (21), vorzugsweise in eine von dem Bauteil (50, 51) abweisenden Richtung, mitgetragen werden.

12. Verfahren nach zumindest einem der vorgenannten Ansprüche 10 - 11, **gekennzeichnet durch den Schritt:**
- Dosieren und/oder zuführen des granularen Materials (10) in die zumindest eine Hauptströmungsleitung (20) durch zumindest eine Zusatzöffnung (22),
wobei die zumindest eine Zusatzöffnung (22) an der zumindest einen Hauptströmungsleitung (20) angeordnet ist.
